# FASCICULE DE BREVET EUROPEEN

(11) **EP 3 259 190 B1**
(45) Date de publication et mention de la délivrance du brevet: **18.07.2018**
(21) Numéro de dépôt: 16775300.3
(22) Date de dépôt: 12.09.2016
(51) Int. Cl.: B64G 1/64, B64G 1/10

(54) **VÉHICULE SPATIAL COMPRENANT DES POTEAUX POUR FORMER UN EMPILEMENT, EMPILEMENT COMPRENANT AU MOINS DEUX TELS VÉHICULES PLACÉS DANS UN LANCEUR ET PROCÉDÉ DE LARGAGE DES VÉHICULES**
WELTRAUMFAHRZEUG MIT PFOSTEN ZUR BILDUNG EINES STAPELS, STAPEL MIT MINDESTENS ZWEI SOLCHEN FAHRZEUGEN IN EINER TRÄGERRAKETE UND VERFAHREN ZUR FREIGABE DER FAHRZEUGE
SPACE VEHICLE COMPRISING POSTS FOR FORMING A STACK, STACK COMPRISING AT LEAST TWO SUCH VEHICLES PLACED IN A LAUNCHER, AND METHOD FOR RELEASING THE VEHICLES

(30) Priorité: 16.09.2015 FR 1558695
(43) Date de publication de la demande: 27.12.2017
(73) Titulaire: Airbus Defence and Space SAS, 78130 Les Mureaux (FR)
(72) Inventeur: PONCET, Dominique, 31402 Toulouse (FR); PRUD HON, Christophe, 31402 Toulouse (FR); GUYOT, Serge, 31402 Toulouse (FR)
(74) Mandataire: Cabinet Plasseraud
(86) Numéro de dépôt international: PCT/FR2016/052287
(87) Numéro de publication internationale: WO 2017/046497

(56) Documents cités:
- EP-A1- 3 012 194
- WO-A1-96/39328
- WO-A2-00/09396
- US-A- 5 199 672
- US-A1- 2008 078 886
- US-A1- 2015 232 205

## Description

L'invention concerne le domaine des véhicules spatiaux, et plus particulièrement mais non limitativement, le domaine des satellites destinés à être mis en orbite autour de la Terre.

Classiquement, un satellite est mis en orbite au moyen d'un lanceur, lequel amène le véhicule dans l'espace pour le larguer selon l'orbite prévue.

Afin de réduire les coûts liés au lancement de satellite, il est connu de placer dans un même lanceur plusieurs satellites qui seront largués au cours d'un même lancement. On parle alors de lancement d'une grappe de satellites. Plus le nombre de satellites lancés est important, plus importante est la réduction des coûts.

Un problème lorsque plusieurs satellites sont placés dans un même lanceur est la gestion des efforts au lancement. En effet, la phase de lancement génère des vibrations et des chocs, en plus de créer une poussée due à l'accélération. Ainsi, un simple empilement des satellites les uns sur les autres produit notamment sur les satellites situés sous un ou plusieurs satellites (par rapport à la gravité et/ou le sens de l'accélération) des efforts risquant d'endommager les équipements portés par ce satellite.

Or, la tendance actuelle est au lancement de satellites de plus en plus puissants, comprenant de multiples équipements et des murs radiatifs de surfaces importantes pour refroidir les équipements. Certains satellites peuvent présenter un poids de quelques tonnes.

Il est alors nécessaire de prévoir des moyens permettant de placer de manière adéquate les satellites dans un même lanceur pour minimiser les efforts sur les satellites.

Un moyen connu est de mettre en place dans le lanceur une structure connue sous le nom de « dispenseur ». Le document US 8,939,409 décrit un exemple de dispenseur. Un dispenseur comprend typiquement d'une part des éléments fixés au lanceur et éventuellement d'autre part des éléments fixés aux satellites, c'est-à-dire d'une part des éléments destinés à rester liés au lanceur après le largage des satellites et d'autre part des éléments destinés à accompagner les satellites largués. Les satellites sont ainsi supportés par le dispenseur à la manière d'une étagère, et ne se supportent pas les uns les autres.

Les dispenseurs présentent cependant l'inconvénient d'être spécialement adaptés au type de satellite à envoyer. Ainsi, la conception des dispenseurs dépend de leur utilisation. Il peut en outre arriver que plusieurs satellites de conception différente doivent être largués par un même lanceur, complexifiant la structure du dispenseur dans le lanceur. En outre, le dispenseur comprend des éléments qui font partie intégrante du lanceur. Ces éléments rajoutent du poids au lanceur et sont, au final, pénalisant pour la mission. La répartition du poids dans le lanceur doit également être surveillée, notamment lors du largage. En effet, afin de conserver l'équilibre du lanceur une fois lancé, la séquence de largage des satellites doit respecter à tout moment une répartition du poids adéquate au sein du lanceur. Les opérations de largage s'en trouvent complexifiées.

Un autre inconvénient d'un dispenseur est que la forme et les dimensions des satellites sont limitées par la place offerte par le dispenseur.

Il est également connu d'empiler directement les satellites les uns sur les autres en prévoyant, sur la structure de chaque satellite, une interface dédiée pour l'empilement, de sorte que les corps des satellites ne sont pas eux-mêmes en contact les uns avec les autres, mais par l'intermédiaire de l'interface dédiée.

Le document US 8,915,472 présente un exemple de système permettant d'attacher deux satellites ensemble. A cet effet, chaque satellite comprend une structure centrale s'étendant sur toute une longueur du satellite, sur laquelle des panneaux support de charge sont placés. La structure centrale d'un premier satellite est connectée avec la structure centrale d'un deuxième satellite au moyen d'une bande détachable prétendue. La transmission des efforts entre les deux satellites passe alors par leur structure centrale.

Un inconvénient de ce système est qu'il diminue l'espace disponible pour monter les équipements sur les satellites. Notamment, les antennes d'un satellite de télécommunication sont placées sur la face Terre du corps du satellite. Dans le document US 8,915,472, la structure centrale doit être accessible par au moins une face du corps satellite pour permettre le contact entre deux structures centrales de deux satellites sans contact avec d'autres éléments. Ces faces en question sont alors indisponibles pour y mettre des équipements des satellites, et notamment des antennes.

Un autre inconvénient est que, de manière incidente à l'inconvénient mentionné ci-dessus, les satellites ne peuvent pas être disposés d'une manière optimisant l'espace à l'intérieur du lanceur, appelé espace sous coiffe. En effet, la présence de la structure centrale impose une orientation identique pour tous les satellites empilés.

Le document US 8,511,617 propose également d'empiler des satellites présentant une structure d'interface dédiée. Dans ce document, la structure dédiée se présente sous la forme d'un cylindre extérieur au corps du satellite, les cylindres servant alors d'appui lorsque les satellites sont empilés.

Un inconvénient de cette solution est que le cylindre extérieur au satellite limite également l'espace disponible pour les équipements portés par le satellite. En outre, là encore, les satellites ne peuvent pas être disposés dans n'importe quel sens du fait du cylindre extérieur qui impose un placement des équipements dans l'espace disponible entre le corps du satellite et le cylindre. L'espace sous coiffe n'est là non plus pas optimisé.

Aussi bien la structure centrale décrite dans US 8,915,472 que le cylindre extérieur décrit dans US 8,511,617 sont des structures relativement massives et imposantes qui augmentent le poids du satellite.

Enfin, le document US 2008/078886 décrit un véhicule spatial selon le préambule de la revendication 1.

Il existe donc un besoin pour une solution permettant d'empiler dans un lanceur plusieurs satellites, ou d'une manière générale plusieurs véhicules spatiaux, surmontant notamment les inconvénients précités.

Un premier objet de l'invention est de proposer un véhicule spatial permettant d'être placé dans un lanceur avec au moins un autre véhicule sans que la transmission des efforts n'endommage les véhicules.

Un deuxième objet de l'invention est de proposer un véhicule spatial permettant d'être placé dans un lanceur avec au moins un autre véhicule n'augmentant pas ou peu ni le poids total du satellite ni le poids du lanceur.

Un troisième objet de l'invention est de proposer un véhicule spatial permettant d'être placé dans un lanceur avec au moins un autre véhicule offrant une flexibilité dans l'orientation des véhicules placés dans le lanceur pour optimiser l'espace sous coiffe.

Un quatrième objet de l'invention est de proposer un véhicule spatial permettant d'être placé dans un lanceur avec au moins un autre véhicule offrant une flexibilité dans la forme et les dimensions de chaque véhicule empilé.

Un cinquième objet de l'invention est de proposer un véhicule spatial permettant d'être placé dans un lanceur avec au moins un autre véhicule dans lequel la structure d'interface entre les deux véhicules peut s'adapter aux équipements pouvant être mis en place sur les satellites.

Un sixième objet de l'invention est de proposer un véhicule spatial permettant d'être placé dans un lanceur avec au moins un autre véhicule dans lequel les véhicules peuvent être largués un par un ou par groupe.

Ainsi, selon un premier aspect, l'invention propose un véhicule spatial, tel qu'un satellite, destiné à être mis en orbite autour d'une planète, le véhicule étant selon la revendication 1.

La structure de renfort peut comprendre des éléments de renfort sous forme de branche dont le nombre correspond au moins au nombre de poteaux, chaque branche étant fixée entre deux poteaux. Les branches peuvent alors être confondues avec des parois du module porte-équipement, les parois formant support pour des équipements du véhicule.

La structure de renfort peut en variante comprendre des éléments de renfort sous forme de branche dont le nombre correspond au moins au nombre de poteaux, chaque branche étant fixée d'une part à un poteau et d'autre part à un même centre de fixation.

Avantageusement, les branches de renfort sont reliées deux à deux par des éléments de consolidation en cisaillement.

Selon un exemple de réalisation, les poteaux sont au nombre de trois et sont répartis aux sommets d'un triangle équilatéral.

Selon un autre exemple de réalisation, les poteaux sont au nombre de quatre et sont répartis aux sommets d'un parallélogramme.

Chaque dispositif de verrouillage libérable peut comprendre par exemple un élément magnétique ou un élément pyrotechnique.

Chaque poteau peut être muni de manière avantageuse de deux dispositifs de verrouillage libérables, permettant d'empiler le satellite sur un autre satellite ou sur une structure d'interface et d'empiler sur le satellite un autre satellite.

De préférence, mais non nécessairement, chaque poteau s'étend longitudinalement entre deux extrémités, chaque extrémité étant munie d'un dispositif de verrouillage. L'empilement de satellites se fait alors par les extrémités des poteaux, en suivant la direction longitudinale. Les contraintes supportées par les poteaux sont alors principalement des contraintes de cisaillement, et les poteaux peuvent être conçus (formes et dimensions) pour supporter ces contraintes.

Selon un deuxième aspect, l'invention propose un procédé d'assemblage d'au moins deux véhicules tels que présentés ci-dessus. Le procédé comprend les étapes suivantes :
- mise en position des au moins deux véhicules de sorte que les poteaux d'un premier véhicule s'étendent au moins partiellement dans une même direction longitudinale que les poteaux du deuxième véhicule ;
- mise en coopération de chaque dispositif de verrouillage du premier véhicule avec un dispositif de verrouillage du deuxième véhicule ;
- passage à l'état verrouillé des dispositifs de verrouillage du premier véhicule sur les dispositifs de verrouillage du deuxième véhicule.

Selon un troisième aspect, l'invention propose un empilement de véhicules tel que présentés ci-dessus, comprenant au moins deux véhicules solidaires l'un de l'autre, le au moins un dispositif de verrouillage libérable de chaque poteau d'un premier véhicule étant dans l'état verrouillé avec un dispositif de verrouillage sur un poteau du deuxième véhicule, les poteaux de chaque véhicule s'étendant dans une même direction longitudinale, l'empilement comprenant en outre un dispositif de commande de l'état des dispositifs de verrouillage.

Les véhicules de l'empilement sont notamment des satellites comprenant une face Terre et une face anti-Terre, les faces Terre et anti-Terre, pouvant être orientées selon la direction longitudinale des poteaux ou selon une direction transversale aux poteaux.

Selon un quatrième aspect, l'invention propose un lanceur de véhicules spatiaux, le lanceur comprenant une structure d'interface véhicule et au moins un premier empilement de véhicules tel que présenté ci-dessus. Au moins le premier véhicule de l'empilement est un véhicule comprenant sur chaque poteau deux dispositifs de verrouillage libérables, un premier dispositif de verrouillage de chaque poteau du premier véhicule étant dans l'état verrouillé sur un dispositif de verrouillage du deuxième véhicule, le deuxième dispositif de verrouillage de chaque poteau du premier véhicule étant dans l'état verrouillé sur la structure d'interface véhicule.

Selon un cinquième aspect, l'invention propose un procédé de largage de véhicules au moyen d'un lanceur tel que présenté ci-dessus selon la revendication 17. Dans un exemple de réalisation, le procédé comprend une étape de séparation entre un véhicule à larguer et un véhicule destiné à rester dans le lanceur par mise dans l'état déverrouillé des dispositifs de verrouillage entre les deux véhicules de manière à larguer un unique véhicule. En variante ou en combinaison, le procédé de largage comprend une étape de séparation entre un groupe de véhicules à larguer et un véhicule destiné à rester dans le lanceur par mise dans l'état déverrouillé des dispositifs de verrouillage entre un véhicule du groupe à larguer et le véhicule destiné à rester dans le lanceur, de manière à larguer le groupe de véhicules.

D'autres caractéristiques et avantages de l'invention apparaîtront à la lumière de la description qui suit de modes de réalisation particuliers accompagnée des figures dans lesquelles :
- La figure 1 est une vue schématique tridimensionnelle d'un premier exemple d'un satellite, comprenant un corps sur lequel sont placés des équipements, des panneaux solaires étant représentés en position déployée en traits pleins et en position repliée en traits discontinus ;
- La figure 2 est une vue tridimensionnelle du satellite de la figure 1, le corps étant transparent ;
- La figure 3 est une vue de dessus du satellite de la figure 2 ;
- La figure 4 est une représentation schématique en vue de dessus de poteaux du satellite des figures 1 à 3 et d'une structure de renfort selon un premier mode de réalisation ;
- La figure 5 est une vue tridimensionnelle des poteaux et de la structure de renfort de la figure 4 ;
- La figure 6 est une représentation schématique en vue de dessus de poteaux du satellite des figures 1 à 3 et d'une structure de renfort selon un deuxième mode de réalisation ;
- La figure 7 est une vue tridimensionnelle des poteaux et de la structure de renfort de la figure 6 ;
- La figure 8 est une vue tridimensionnelle d'un exemple de réalisation d'un empilement de satellites des figures 1 à 3 ;
- La figure 9 est une vue de côté de l'empilement de la figure 8 ;
- La figure 10 est une vue tridimensionnelle d'un empilement de satellites des figures 1 à 3 placé dans un lanceur, ce dernier étant représenté en transparence ;
- La figure 11 est une vue de dessus du lanceur de la figure 10 ;
- La figure 12 est une représentation schématique d'un exemple de réalisation de deux dispositifs de verrouillage libérable placés aux extrémités de deux poteaux situés en regard l'un de l'autre ;
- La figure 13 est une vue tridimensionnelle d'un autre exemple de réalisation d'un empilement d'un deuxième exemple de satellite ;
- La figure 14 est une représentation schématique en vue de dessus d'un satellite de l'empilement de la figure 13 ;
- La figure 15 est une représentation de l'empilement de la figure 13 placé dans un lanceur ;
- La figure 16 est un schéma illustrant un exemple d'un procédé d'empilement de satellites dans un lanceur.

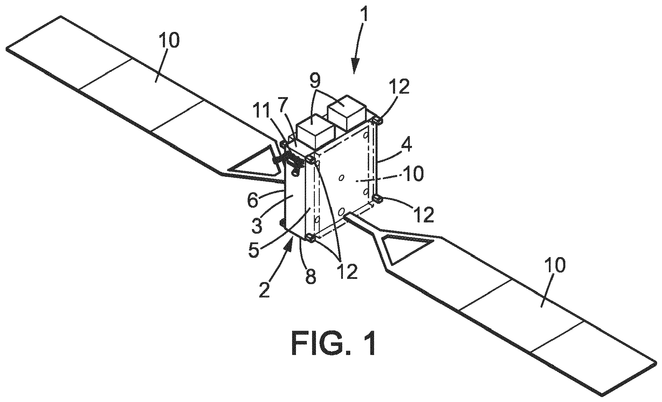

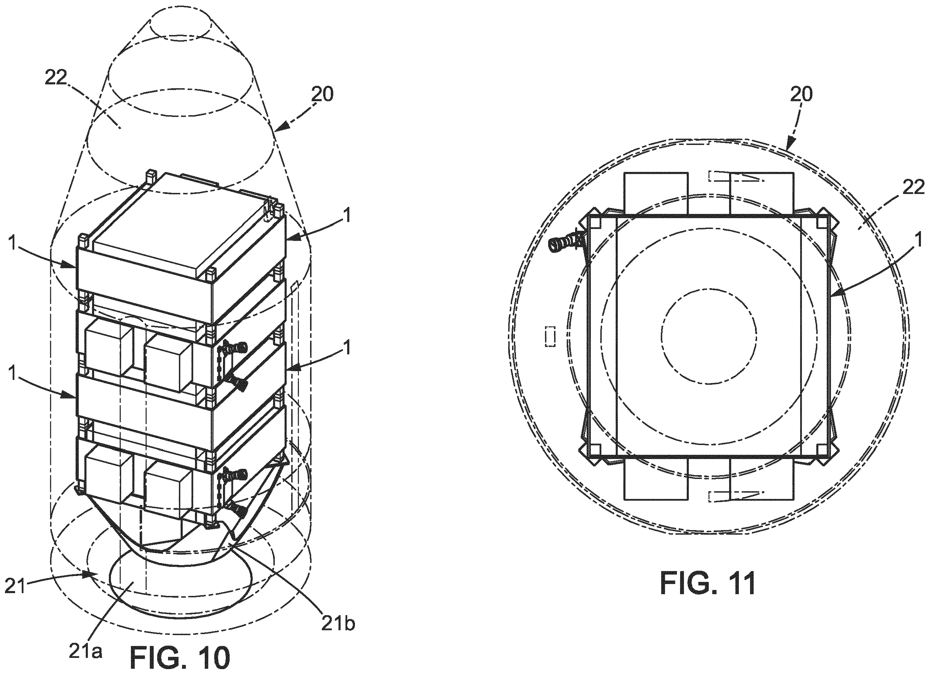

Sur les figures 1 à 11, il est représenté un premier exemple d'un véhicule spatial, et en particulier un exemple d'un satellite **1** de télécommunication, destiné à se mettre en orbite autour de la Terre.

Le terme véhicule désigne ici tout élément comprenant un module porte-équipement susceptible de transporter des équipements. Il peut être muni de moyens de propulsion qui lui sont propres, ou être destiné à être simplement largué en un point de l'espace dans l'attente d'être ensuite récupéré par d'autres moyens spatiaux.

Le module porte-équipement du satellite **1** est communément appelé corps **2** de satellite 1, et est de forme générale parallélépipédique, de manière à présenter quatre faces appelées face **3** Ouest, face **4** Est, face **5** Nord, face **6** Sud, en référence aux points cardinaux terrestres, et deux faces appelées face **7** Terre et face **8** anti-Terre, en référence à l'orientation de ces faces par rapport à la Terre. Une ou plusieurs antennes **9**, présentées schématiquement sur les figures, sont communément placées sur la face 7 Terre pour être orientées vers la Terre. Le satellite 1 est muni de divers équipements fonction de sa mission. Typiquement, le satellite 1 peut comprendre des panneaux **10** solaires, montés sur les faces 5 Nord et 6 Sud pour recevoir un ensoleillement maximal. Sur la figure 1, les panneaux 10 solaires sont illustrés en traits pleins en position déployés. En traits discontinus, le panneau solaire 10 monté sur la face 5 Nord est illustré en position repliée contre cette face. Le satellite 1 peut également embarquer des propulseurs pour corriger la trajectoire du satellite 1 en orbite. Le pointage du satellite dans la direction souhaitée utilise généralement des senseurs 11 optiques, tels que des senseurs d'étoiles.

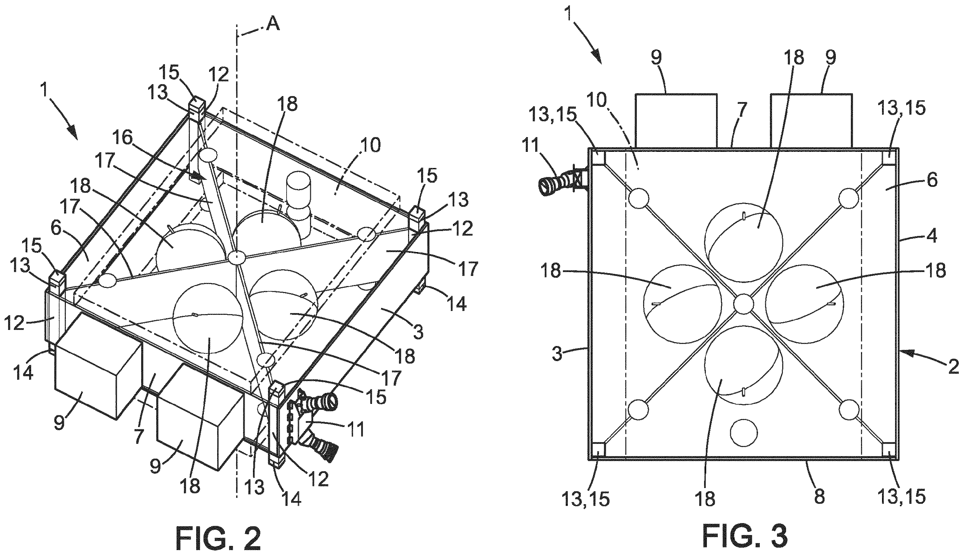

Sur les figures 2 et 3, le panneau 10 solaire monté sur la face 6 Sud est représenté en position repliée contre cette face 6, et le panneau 10 solaire et la face 6 Sud sont représentés en transparence afin de faire apparaître la structure du corps 2 du satellite, ici représentée schématiquement. Il est alors visible que le satellite 1 comprend des poteaux **12**, s'étendant dans une même direction **A** longitudinale, perpendiculaire aux faces 5 Nord et 6 Sud selon l'exemple présenté.

Dans ce qui suit, les termes « longitudinal », « longitudinalement » et leurs variantes désignent ce qui est parallèle à la direction A longitudinale. Les termes « transversal », « transversalement » et leurs variantes désignent alors ce qui est perpendiculaire à la direction A longitudinal.

Le nombre de poteaux 12 est au moins égal à trois, et est de préférence égal à quatre dans le cas du corps 2 parallélépipédique. Les poteaux 12 ne sont pas alignés, et sont disposés par exemple aux sommets d'un triangle dans le cas de trois poteaux, ou aux sommets d'un quadrilatère dans le cas de quatre poteaux 12.

Les poteaux 12 sont placés à la périphérie du corps 2, c'est-à-dire qu'ils sont à distance d'un centre C géométrique du corps 2.

Les poteaux 12 peuvent être placés à la périphérie intérieure du corps 2, comme illustré sur les figures 1 à 11, c'est-à-dire que les parois portant les faces 3 à 8 du corps 2 du satellite 1 enveloppent et s'étendent entre les poteaux 12. En d'autres termes, les poteaux 12 matérialisent le contour réel du corps 2.

En variante, les poteaux 12 peuvent être placés à la périphérie extérieure du corps 2, c'est-à-dire que les poteaux définissent un contour virtuel du corps 2, les parois portant les faces 3 à 8 du corps 2 du satellite 1 s'étendant à l'intérieur de ce contour virtuel.

Le centre C géométrique du corps 2 est par exemple le barycentre du corps 2. Les quatre poteaux 12 sont de préférence disposés à équidistance du centre C géométrique, aux sommets d'un rectangle ou d'un carré, en fonction des dimensions des faces 5 Nord et 6 Sud.

Ainsi, comme représenté sur les figures 2 et 3, les parois du corps 2 matérialisant les faces 3, 4 Ouest, Est et 7, 8 Terre, anti-Terre du satellite 1 sont chacune fixées entre deux poteaux 12. Le volume délimité par le corps 2 du satellite ne s'étend donc pas au-delà des poteaux 12.

Chaque poteau 12 comprend deux extrémités, à savoir une extrémité 13 dite distale et une extrémité **14** dite proximale, les adjectifs « distal » et « proximal » étant pris ici en référence à la distance avec une structure d'interface véhicule d'un lanceur, comme cela sera explicité plus loin, une extrémité 14 proximale étant plus proche de la structure d'interface véhicule qu'une extrémité 13 distale. Les extrémités 13 distales des poteaux 12 du satellite 1 sont de préférence dans un même plan transversal. De même, les extrémités 14 proximales des poteaux 12 sont également situées dans un même plan transversal. Cependant, rien n'empêche que tous les poteaux 12 d'un satellite 1 aient une taille différente pour s'adapter à la configuration du satellite 1. Au moins une des extrémités 13, 14 est munie d'un dispositif **15** de verrouillage libérable. En pratique, chaque extrémité 13, 14 des poteaux 12 du satellite 1 est munie d'un dispositif 15 de verrouillage libérable.

Les poteaux 12 sont destinés à permettre l'empilement d'au moins deux satellites 1 l'un sur l'autre, de sorte que la transmission des efforts entre les deux satellites 1 empilés passent majoritairement, et de préférence exclusivement, par les poteaux 12. Ainsi, avantageusement, la dimension longitudinale des poteaux 12 est supérieure à celle du corps 2, et encore plus avantageusement, elle est supérieure à celle du corps 2 en tenant compte des équipements tel que les panneaux 10 solaires lorsque ceux-ci sont repliés. Plus précisément, et selon l'exemple présenté, l'extrémité 13 distale et l'extrémité 14 proximale se retrouvent au moins au même niveau que les panneaux 10 solaires repliés, voire s'étendent au-delà.

A cet effet, chaque dispositif 15 de verrouillage de chaque satellite 1 peut présenter deux états :
- un état verrouillé, dans lequel le dispositif 15 de verrouillage est fixé sur un autre dispositif de verrouillage complémentaire, par exemple un dispositif 15 de verrouillage d'un autre satellite 1, de sorte que les deux satellites 1 sont solidaires l'un de l'autre ;
- un état déverrouillé, dans lequel le dispositif 15 de verrouillage est libéré de tout autre dispositif de verrouillage, de sorte que le satellite 1 se retrouve physiquement indépendant de tout autre satellite 1.

Deux satellites 1 sont donc empilés en posant leurs poteaux 12 respectifs les uns en face et sur les autres selon une même direction A longitudinale, par exemple en rapprochant l'extrémité 13 distale des poteaux 12 d'un premier satellite 1 de l'extrémité 14 proximale des poteaux 12 d'un deuxième satellite. Puis les dispositifs 15 de verrouillage du premier satellite sont mis en coopération avec les dispositifs 15 de verrouillage du deuxième satellite, et chaque dispositif 15 de verrouillage est mis dans l'état verrouillé. Les deux satellites 1 sont alors solidaires l'un de l'autre.

Comme cela sera explicité plus loin, chaque empilement de satellite comprend un dispositif de commande des dispositifs 15 de verrouillage des satellites 1 de l'empilement permettant de séparer les satellites pour les larguer dans l'espace.

Les poteaux 12 sont répartis à la périphérie du corps 2 de manière à assurer une meilleure reprise des efforts entre les satellites 1, tout en tenant compte de l'encombrement dans l'environnement du corps 2 du satellite 1. En effet, plus les poteaux 12 sont éloignés du centre C de géométrie du corps 2, et donc les uns des autres, plus la stabilité de l'empilement de deux satellites 1 est grande, et moins les contraintes en cisaillement sur les poteaux 12 empilés sont élevées. L'éloignement entre les poteaux 12 et le centre C de géométrie recherché est donc le plus grand possible compte tenu de l'encombrement à la fois autour du corps 2 des satellites et dans le lanceur. Par conséquent, cela permet de minimiser la quantité de matière nécessaire pour les poteaux tout en maximisant la tenue mécanique du satellite.

Une telle disposition des poteaux 12 permet également d'une part de maximiser l'espace disponible pour l'aménagement du satellite 1 et d'autre part de minimiser l'encombrement global d'un empilement de satellites sous la coiffe du lanceur en permettant aux satellites du dessus ou du dessous de s'étendre en partie à l'intérieur du satellite 1. Afin de limiter la déformation en cisaillement des poteaux 12 lorsque les satellites empilés sont soumis à des efforts, chaque satellite 1 comprend en outre une structure **16** de renfort reliant rigidement et transversalement chaque poteau 12 du satellite 1 à au moins deux autres poteaux 12 du satellite 1.

La structure 16 de renfort comprend des éléments de renfort sous forme de branches **17**, qui relient les poteaux 12 entre eux. Le nombre de branches 17 est alors égal au nombre de poteaux 12. Selon l'exemple des figures 2 et 3, les branches 17 sont au nombre de quatre et sont disposées selon les diagonales du carré ou du rectangle formé par les poteaux 12. Plus précisément, chaque branche 17 est fixée rigidement d'une part à un poteau 12 et d'autre part à un même centre de fixation du corps 2, qui est confondu, selon l'exemple présenté ici, avec le centre C géométrique du corps 2. Chaque branche 17 de la structure 16 de renfort peut présenter une dimension longitudinale sensiblement égale à la dimension longitudinale du poteau 12 sur lequel elle est fixée.

Ainsi, les branches 17 de la structure 16 de renfort rigidifient les poteaux 12 soumis à des efforts tendant à les déformer transversalement, et notamment aux déformations en cisaillement.

Les branches 17 de la structure 16 de renfort, formant un croisillon à l'intérieur du corps 2, augmentent l'encombrement à l'intérieur du corps 2 du satellite 1 de manière négligeable. En effet, l'épaisseur des branches 17, c'est-à-dire leur dimension dans le plan transversal, peut être adaptée pour pouvoir aménager l'espace à l'intérieur du corps 2. Par exemple, comme illustré sur les figures 2 et 3, l'espace à l'intérieur du corps 1 demeure disponible pour y placer quatre réservoirs **18**, les branches 17 définissant deux à deux un compartiment.

En variante, la structure 16 de renfort peut être formées par des parois du corps 2, en l'occurrence selon l'exemple illustré, les parois matérialisant les faces 3, 4 Ouest, Est et 7, 8 Terre, anti-Terre du satellite 1, qui, en étant fixées sur les poteaux 12 et les reliant deux à deux, apportent également de la rigidité. Dans ce cas, la structure 16 de renfort n'augmente pas du tout l'encombrement du corps 2 du satellite 1.

La structure 16 de renfort peut comprendre par ailleurs des éléments **19** de consolidation en cisaillement, pour augmenter davantage la rigidité des poteaux vis-à-vis des efforts en cisaillement, et reliant deux à deux les branches 17.

Les poteaux 12, les branches 17 et les éléments 19 de consolidation en cisaillement sont dimensionnés en fonction des dimensions et du poids des satellites 1, ainsi que des efforts attendus dans le lanceur. Notamment, les poteaux 12 peuvent être creux et être utilisés pour y faire passer des conduits ou des câbles pour les équipements du satellite 1, mais peuvent également être pleins pour supporter des contraintes élevées. La section des poteaux 12 peut également être de section transversale circulaire, rectangulaire, en T etc. en fonction des contraintes à supporter. La forme de la section transversale peut varier sur sa longueur. Leur matériau peut être de n'importe quel type comme par exemple : aluminium, titane, composite, ou un autre matériau.

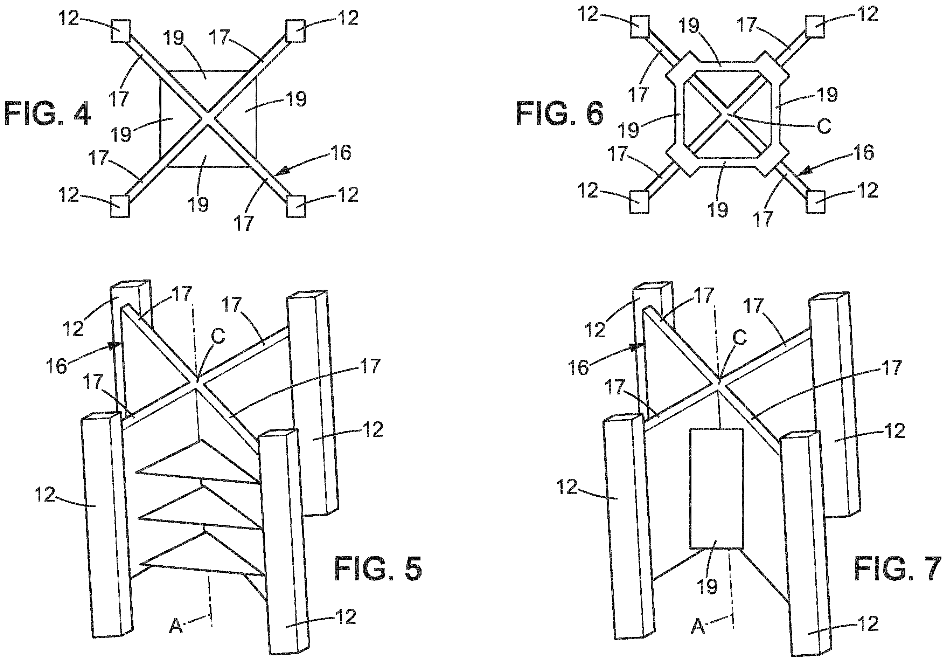

Les figures 4 à 7 sont des représentations schématiques des poteaux 12, au nombre de quatre disposés aux sommets d'un carré, reliés par des branches 17 comme présentés précédemment, et des éléments 19 de consolidation en cisaillement selon deux modes de réalisation. Selon un premier mode de réalisation (figures 4 et 5), les éléments 19 de consolidation sont disposés transversalement entre deux branches 17. Par exemple, les éléments 19 de consolidation se présentent sous forme d'une succession longitudinale de plaques triangulaires, s'étendant dans le compartiment formé entre deux branches 17 adjacentes. Selon un deuxième mode de réalisation (figures 6 et 7), les éléments 19 de consolidation sont disposés longitudinalement entre deux branches 17 adjacentes, et se présentent sous forme de plaque rectangulaire. Dans ce cas, les parois du corps 2 matérialisant les faces 3, 4 Ouest, Est et 7, 8 Terre, anti-Terre du satellite 1 peuvent faire office d'éléments 19 de consolidation en cisaillement.

La structure du satellite ainsi décrite permet un empilement des satellites 1 dans un lanceur **20**, de sorte que la transmission des efforts entre les satellites 1 passe majoritairement, voire exclusivement, par les poteaux 12. Les satellites 1 empilés sont placés dans le lanceur lequel comprend classiquement une structure **21** d'interface véhicule. La structure 21 d'interface véhicule est une structure a priori connue en elle-même par l'Homme du métier permettant d'interfacer un satellite avec un lanceur, et de les solidariser. De manière optionnelle, en fonction du lanceur considéré, la structure 21 d'interface véhicule peut se décomposer en deux parties : un cône inférieur **21a** solidarisé directement au lanceur et correspondant aux interfaces classiques des lanceurs, et un adaptateur **21b** situé entre le cône inférieur 21a et l'empilement des satellites 1. L'adaptateur 21b permet de transformer la répartition des efforts fournie par l'empilement des satellites 1 en une répartition des efforts compatible avec le cahier des charges du lanceur choisi et de son cône inférieur 21a standard. L'adaptateur 21b est considéré comme pouvant être fourni avec l'empilement des satellites 1.

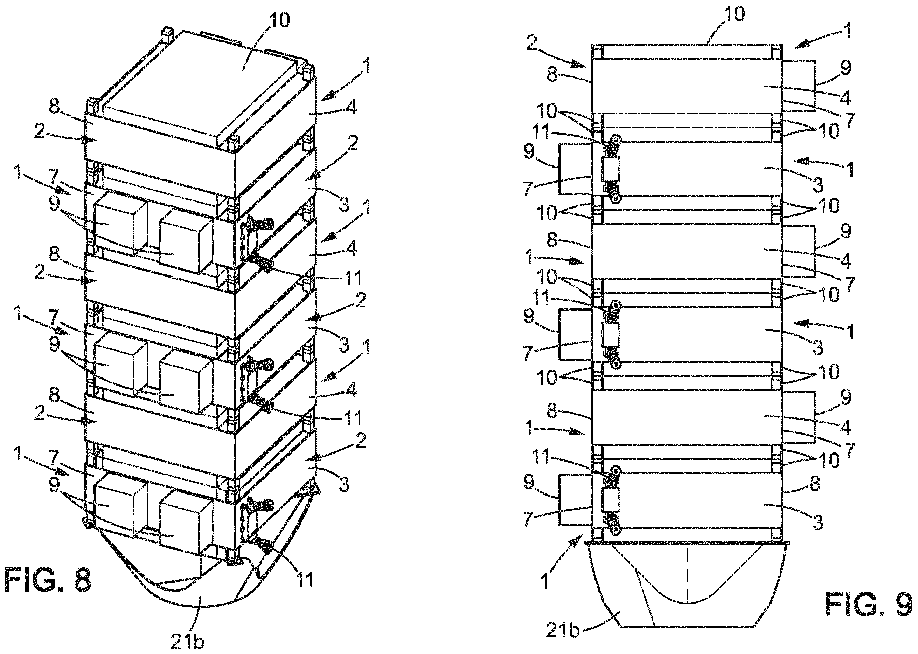

Les figures 8 et 9 illustrent un exemple d'un empilement de six satellites 1 sur la structure 21 d'interface véhicule utilisant un cône inférieur 21a et un adaptateur 21b. Les poteaux 12 des satellites sont tous orientés selon la même direction A longitudinale à partir de la structure 21 d'interface, de sorte que l'extrémité 13 distale des poteaux 12 d'un premier satellite 1 soit en vis-à-vis de l'extrémité 14 proximale des poteaux 12 d'un deuxième satellite, l'extrémité 13 distale des poteaux 12 du deuxième satellite 1 étant en vis-à-vis de l'extrémité 14 proximale des poteaux 12 d'un troisième satellite et ainsi de suite jusqu'au sixième et dernier satellite 1. En d'autres termes, la face 5 Nord d'un satellite 1 fait face à la face 6 Sud du satellite 1 adjacent dans l'empilement selon l'exemple présenté ici.

De préférence, la dimension longitudinale des poteaux 12 est telle que les panneaux 10 solaires de deux satellites 1 adjacents ne sont pas en contact. De manière générale, deux satellites 1 adjacents d'un empilement sont en contact uniquement par leurs poteaux 12.

Les dispositifs 15 de verrouillage libérables sont tous de préférence identiques, facilitant la fabrication et la gestion des satellites 1.

Les poteaux 12 permettent d'empiler les satellites de manière à optimiser l'espace sous coiffe dans un lanceur, notamment en permettant d'empiler les satellites en alternant l'orientation des satellites 1 de sorte que les équipements de deux satellites adjacents n'interfèrent pas. Par exemple, les satellites 1 d'un empilement peuvent tous avoir leur faces 7 Terre et 8 anti-Terre orientée selon la direction transversale comme illustré, ou tous selon la direction longitudinale. L'orientation autour de la direction longitudinale peut également être alternée entre les satellites 1 empilés : par exemple, comme illustré sur les figures 8 et 9, respectivement la face 3 Ouest et la face 7 Terre d'un satellite 1 peuvent être orientées à l'opposé respectivement de la face 3 Ouest et de la face 7 Terre du satellite 1 adjacent, de sorte que les antennes 9 des deux satellites 1 adjacents ne se gênent pas mutuellement. Plus généralement, l'orientation des satellites 1 empilés dans le lanceur dépend directement de l'encombrement sur les différentes faces 3 à 8 des corps 2.

Afin de placer les satellites 1 dans un lanceur **20** muni d'une structure 21 d'interface véhicule, l'empilement de satellites 1 est d'abord formé comme décrit précédemment. L'extrémité 14 proximale de chaque poteau 12 du premier satellite 1 est ensuite placée en vis-à-vis de la structure 21 d'interface, sous la coiffe **22** du lanceur 20. La structure 21 d'interface est alors adaptée pour coopérer avec les dispositifs 15 de verrouillage libérables du premier satellite 1. De même que pour les autres satellites 1, le premier satellite 1 de l'empilement, fixé sur la structure 21 d'interface, n'est en contact avec la structure 21 de préférence uniquement par ses poteaux 12. Optionnellement, le premier satellite 1 de l'empilement peut comporter un adaptateur 21b déjà couplé avec l'extrémité 14 proximale de chacun de ses poteaux 12 et qui sera ensuite couplé avec un cône inférieur 21a déjà installé dans le lanceur. En variante, les satellites 1 peuvent être installés un à un dans le lanceur 20. Aucune structure intermédiaire n'est nécessaire entre la coiffe 22 du lanceur 20 et les satellites 1. Il en résulte un gain d'espace et de poids. En outre, il est ainsi possible d'adapter le nombre de satellites 1 en fonction de la capacité du lanceur 20.

Le nombre de satellites 1 empilés n'influe pas sur la conception des poteaux 12 et de la structure 16 de renfort des satellites. En effet, pour empiler les satellites, on comprend que seule une exigence relative à la disposition des poteaux 12 est requise pour permettre la mise en correspondance des extrémités 13, 14 des poteaux 12 de deux satellites 1. Ainsi, il est possible de produire les satellites 1 identiques, en série. Il est également possible de dimensionner les poteaux 12, les branches 17 et les éléments 19 de consolidation en cisaillement en fonction de la position du satellite 1 dans l'empilement. En effet, le premier satellite 1, le plus proche de la structure 21 d'interface véhicule, est en général celui qui supporte le plus d'effort à cause du poids de l'ensemble des autres satellites 1 empilés. Ainsi, les poteaux 12 et la structure 16 de renfort du premier satellite 1 peuvent être surdimensionnés par rapport aux autres satellites 1 de l'empilement. De même, pour le dernier satellite 1 de l'empilement, les poteaux 12 et la structure 16 de renfort peuvent être sous-dimensionnés.

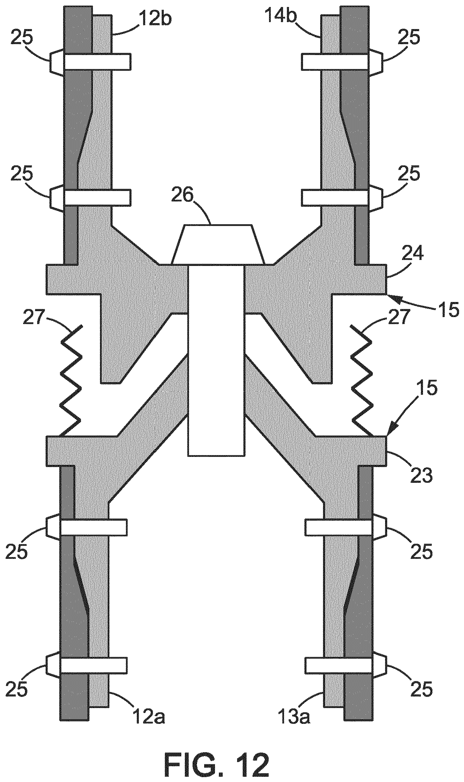

Sur la figure 12, il est représenté un exemple de réalisation de dispositifs 15 de verrouillage libérable entre l'extrémité 13a distale d'un poteau 12a d'un premier satellite et l'extrémité 14b proximale d'un poteau 12b d'un deuxième satellite. Selon cet exemple, les dispositifs 15 de verrouillage libérables sont unilatéraux, c'est-à-dire qu'un unique passage de l'état verrouillé à l'état déverrouillé est prévu, et un retour à l'état verrouillé n'est pas prévu. Les coûts des dispositifs 15 de verrouillage libérable sont ainsi faibles. Cependant, il n'est pas exclu une autre variante de réalisation dans laquelle les dispositifs 15 de verrouillage libérables peuvent être verrouillés à nouveau après déverrouillage, afin de permettre des phases de test au sol pour ces dispositifs.

Selon cet exemple, les poteaux 12a, 12b sont creux, au moins à partir de leurs extrémités.

Le dispositif 15 de verrouillage libérable sur le poteau 12a du premier satellite comprend une pièce **23** mâle insérée dans l'extrémité 13a distale du poteau 12a et y est fixée rigidement par exemple par visserie **25.** Le dispositif 15 de verrouillage libérable sur le poteau 12b du deuxième satellite est complémentaire de celui du premier satellite, et comprend une pièce **24** femelle insérée dans l'extrémité 14b proximale du poteau 12b et y est de même fixée rigidement par visserie 25. Pour passer les dispositifs 15 de verrouillage libérable dans l'état verrouillé, la pièce 23 mâle est insérée dans la pièce 24 femelle, et des moyens **26** de verrouillage, par exemple de type visserie, relient les deux pièces 23, 24. De préférence, un jeu est prévu entre les deux pièces 23, 24, afin d'autoriser un débattement longitudinal entre les deux poteaux 12a, 12b. Des moyens **27** d'amortissement, illustrés schématiquement par des ressorts sur la figure 12, peuvent être montés sur la pièce 23 mâle, de sorte que lorsque le poteau 12b du deuxième satellite s'approche du poteau 12a du premier satellite, par exemple sous l'effet de chocs et/ou de vibrations le contact entre les deux poteaux 12a, 12b est amorti. Les moyens 26 de verrouillage sont couplés à des moyens de déverrouillage, non représentés sur la figure 12. Ces moyens de déverrouillage permettent de supprimer la liaison entre la pièce 23 mâle et la pièce 24 femelle, de sorte que les dispositifs 15 de verrouillage sont dans l'état déverrouillé. Il peut s'agir par exemple de moyens pyrotechniques permettant de supprimer les moyens 26 de verrouillage de type visserie. En variante, les moyens 26 de verrouillage comprennent un élément magnétique, tel qu'un électro-aimant : l'alimentation en un courant permet de relier les deux pièces 23, 24, mettant les dispositifs 15 de verrouillage dans l'état verrouillé. Il suffit alors de couper l'alimentation en courant pour mettre les dispositifs 15 de verrouillage dans l'état déverrouillé. En variante, les moyens 26 de verrouillage pourraient être situés autour des extrémités de chaque poteau.

Lors de la phase de largage des satellites, les moyens 27 d'amortissement facilitent également la séparation de deux satellites préalablement empilés, en permettant leur éloignement respectif suite au passage des moyens 26 de verrouillage dans l'état déverrouillé.

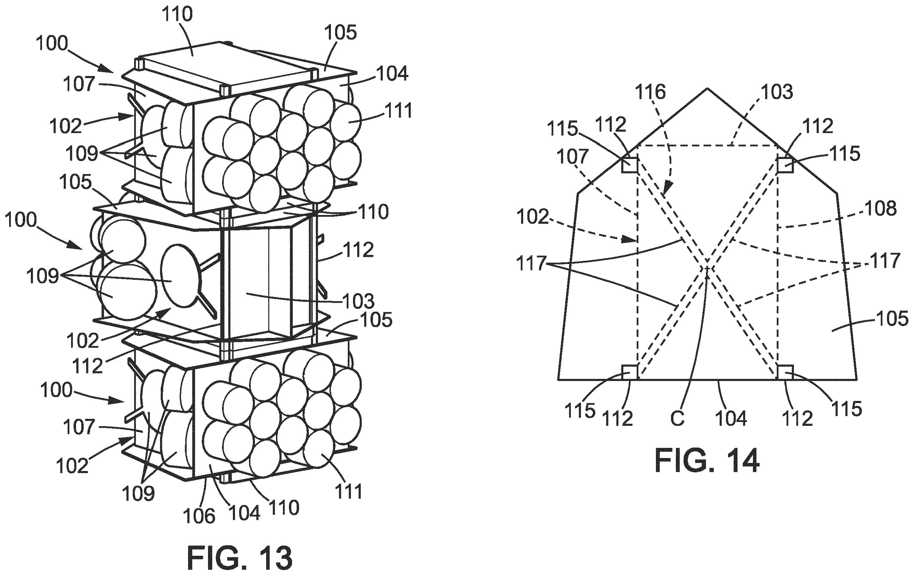

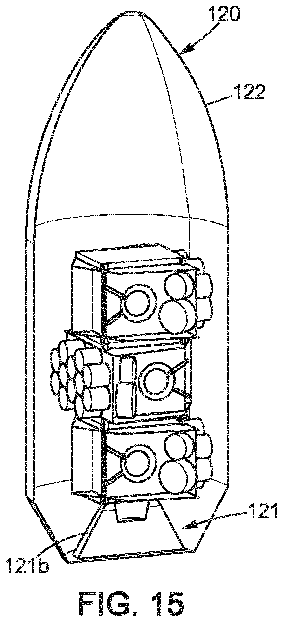

Un deuxième exemple de satellite 100 est représenté sur les figures 13 à 15.

Le satellite **100** selon le deuxième exemple comprend également un corps **102** présentant quatre faces appelées face **105** Nord, face **106** Sud, face **107** Est, face **108** Ouest, en référence aux points cardinaux terrestres, et deux faces appelées face **104** Terre et face **103** anti-Terre, en référence à l'orientation de ces faces par rapport à la Terre. Des équipements, tels que des antennes 109, des panneaux 110 solaires représentés repliés sur les faces 105 Nord et 106 Sud, sont assemblés sur le corps 102. Des antennes 111 peuvent également être prévues sur la face 104 Terre. Il s'agit par exemple d'un satellite de télécommunication.

Le satellite 100 comprend également des poteaux 112. Selon ce deuxième exemple, les poteaux 112 sont placés à la périphérie extérieure du corps 102 du satellite 100, et s'étendent comme précédemment selon une même direction A longitudinale, perpendiculaire aux faces 105 Nord et 106 Sud. Plus précisément, selon ce deuxième exemple, deux poteaux 112 sont disposés contre la face 104 Terre et deux autres poteaux sont disposés contre la face 103 anti-Terre.

La disposition des poteaux 112 est un compromis entre l'encombrement autour du corps 102 du satellite 100 et les exigences de tenue mécanique de l'empilement des satellites 100.

En effet, de même que précédemment, les poteaux 112 sont munis chacun d'au moins un, en pratique deux, chacun disposé à une extrémité 13, 14 d'un poteau 12, dispositifs **115** de verrouillage libérable afin de permettre l'assemblage des satellites 100 entre eux et éventuellement avec une structure 121 d'interface satellite d'un lanceur 120. De même que précédemment, la structure 121 d'interface satellite peut comprendre deux éléments non représentés, à savoir un cône inférieur côté lanceur et un adaptateur côté satellites. Les dispositifs 115 de verrouillage libérables sont sensiblement identiques à ceux déjà décrits. La structure **116** de renfort est sensiblement identique à celle du premier exemple, et comprend des branches 117 sous forme de croisillons, reliant les poteaux 112 entre eux en passant par le centre C géométrique du corps 102 de satellite. Les parois portant les faces Nord 105, Sud 106, Terre 104, et anti-Terre 103 peuvent soit remplacer les branches 117 et former en elles-mêmes la structure 116 de renfort, soit participer à la tenue en cisaillement des poteaux 112 en tant qu'éléments de consolidation en cisaillement.

L'empilement des satellites 100 selon le deuxième exemple est sensiblement identique aux empilements déjà décrits en référence au premier mode de réalisation. Ainsi, les satellites 100 empilés se font face par leurs faces 105 Nord et 106 Sud, et peuvent être orientés différemment les uns des autres autour de la direction longitudinale en fonction de l'encombrement et de la place disponible sous la coiffe 122 du lanceur 120.

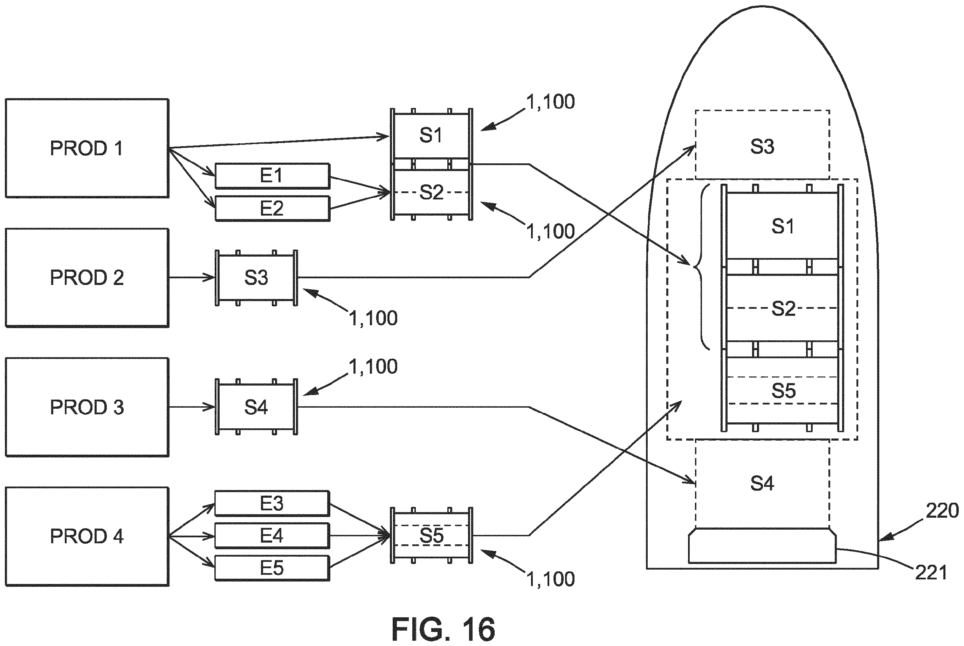

Le satellite 1, 100 ainsi décrit permet d'envisager des empilements hétérogènes, c'est-à-dire comportant plus d'un type de satellites. Ainsi, pour un même empilement à placer dans un lanceur 220, il est possible de considérer plusieurs satellites 1, 100, en l'occurrence cinq selon l'exemple présenté selon la figure 16 notés S1, S2, S3, S4, S5, issus de plusieurs sites de production, notés PROD1, PROD2, PROD3 et PROD4, et différents entre eux, et de former l'empilement une fois sur le site du lancement. Par exemple, le satellite S1 et le satellite S2 sont issus d'un même site PROD1 de production. Le satellite S2 est lui-même formé par assemblage des éléments E1 et E2, qui peuvent être destinés à être largués ultérieurement et séparément dans l'espace. Le site de production PROD1 fournit alors un groupe comprenant le satellite S1 empilé sur le satellite S2, les dispositifs 15, 115 de verrouillage entre les deux satellites S1 et S2 étant alors dans l'état verrouillé. Le satellite S3 est issu du site de production PROD2, le satellite S4 est issu du site de production PROD3, et le satellite S5 est formé de trois éléments E3, E4, E5 issus du site de production PROD4. Sur le site du lancement, se trouvent donc le groupe comprenant les satellites S1 et S2, le satellite S3, le satellite S4 et le satellite S5. Les poteaux 12, 112 des cinq satellites S1 à S5 peuvent être différents, mais ils sont disposés de manière à permettre l'empilement.

Le satellite S4 est d'abord verrouillé sur la structure 221 d'interface satellite du lanceur 220. Optionnellement, le satellite S4 peut être préalablement couplé avec un adaptateur qui sera ensuite couplé, dans le lanceur, avec un cône inférieur déjà installé dans le lanceur. Puis, un nouveau groupe est formé hors du lanceur 220, en verrouillant le satellite S5 sous le groupe formé par les satellites S1 et S2. Le nouveau groupe de satellites S5, S2, S1 est alors empilé sur le satellite S4, dans le lanceur 220, en mettant dans l'état verrouillé les dispositifs 15 de verrouillage entre le satellite S4 et le satellite S5. Enfin, le satellite S3 est verrouillé sur le satellite S1 du nouveau groupe de satellites S5, S2, S1. Le dispositif de commande de l'état des dispositifs de verrouillage peut être soit à bord du lanceur soit comprendre plusieurs modules chacun à bord d'un des satellites S1 à S5 ou d'un satellite d'un groupe. La commande peut être programmée dans le dispositif de commande ou être émise à partir du sol. Les satellites S3 et S4 ne possèdent pas forcément une structure selon l'invention comportant des poteaux, mais ils possèdent néanmoins des moyens compatibles de verrouillage/déverrouillage ainsi que la capacité de supporter les efforts exercés pendant le lancement par la pile de satellites avec laquelle ils sont interconnectés.

La séquence d'empilement et d'assemblage dans le lanceur 220 peut être adaptée en fonction de ce qui est fourni par les sites de production et de l'ordre dans lequel les satellites S1 à S5 doivent être largués dans l'espace.

Une fois le lanceur 220 dans l'espace, les satellites S1 à S5 peuvent être largués grâce au dispositif de commande de l'état des dispositifs de verrouillage. Par exemple, le satellite S3 est largué en premier en passant dans l'état déverrouillé les dispositifs 15 de verrouillage entre le satellite S3 et le satellite S1. Puis, le groupe de satellite S5, S2, S1 peut être largué en bloc, en mettant dans l'état déverrouillé les dispositifs 15 de verrouillages entre le satellite S4 et le satellite S5. Les satellites S5, S2, S1 peuvent ensuite être séparés ultérieurement les uns des autres une fois largués dans l'espace. Enfin, le satellite S4 est séparé de la structure 221 d'interface satellite. Le dispositif de commande de l'état des dispositifs de verrouillage peut programmer à l'avance la séquence de largage des satellites.

La séquence de largage n'a pas à tenir compte d'éventuels problèmes d'équilibrage au sein du lanceur.

Le véhicule spatial selon l'invention convient à n'importe quel type de mission spatiale (télécommunications, navigation, véhicules spatiaux d'observation de la terre, science, exploration de l'espace), quelle que soit leur orbite (LEO, GEO, MEO, HEO).

En outre, des équipements seuls peuvent également être largués dans l'espace grâce à cette structure. Des satellites d'une constellation peuvent également être largués par groupes (par exemple par plan orbital) ou un par un.

Le véhicule spatial selon l'invention est bien adapté pour une masse de satellites d'en général 1 tonne ou plus, mais pourrait être également appliqué, sans perte de généralité, à de plus petits satellites de quelques kilogrammes, permettant d'avoir un ou plusieurs empilements situés « côte à côte » sous la coiffe du lanceur.

## Revendications

1. Véhicule (**1**, **100**) spatial, tel qu'un satellite, destiné à être mis en orbite autour d'une planète, le véhicule (**1**, **100**) comprenant :
- au moins un module (**2**, **102**) porte-équipement, destiné à supporter des équipements du véhicule (**1**, **100**) ;
- au moins trois poteaux (**12**, **112**) s'étendant au moins partiellement dans une même direction (**A**) longitudinale et à la périphérie du module (**2**, **102**) porte-équipement ;
- une structure (**16**, **116**) de renfort reliant rigidement transversalement chaque poteau (**12**, **11**2) à au moins deux autres poteaux (**12**, **112**),
**caractérisé en ce que** chaque poteau (**12**, **112**) est muni d'au moins un dispositif (**15**, **115**) de verrouillage libérable destiné à prendre deux états :
∘ un état verrouillé, dans lequel le dispositif (**15**, **115**) de verrouillage est fixé sur un dispositif (**15**, **115**) de verrouillage complémentaire,
∘ un état déverrouillé, dans lequel le dispositif (**15**, **115**) de verrouillage est libéré de tout autre dispositif (**15**, **115**) de verrouillage.

2. Véhicule (**1**, **100**) spatial selon la revendication 1, dans lequel la structure (**16**, **116**) de renfort comprend des éléments de renfort sous forme de branche (**17**, **117**) dont le nombre correspond au moins au nombre de poteaux (**12**, **112**), chaque branche (**17**, **117**) étant fixée entre deux poteaux (**12**, **112**).

3. Véhicule (**1**, **100**) spatial selon la revendication 2, dans lequel les branches (**17**, **117**) sont confondues avec des parois du module (**2**, **102**) porte-équipement, les parois formant support pour des équipements du véhicule (**1**, **100**).

4. Véhicule (**1**, **100**) spatial selon la revendication 1, dans lequel la structure (**16**, **116**) de renfort comprend des éléments de renfort sous forme de branche (**17**, **117**) dont le nombre correspond au moins au nombre de poteaux (**12**, **112**), chaque branche (**17**, **117**) étant fixée d'une part à un poteau (**12**, **112**) et d'autre part à un même centre (**C**) de fixation.

5. Véhicule (**1**, **100**) selon l'une quelconques des revendications 2 à 4, dans lequel les branches (**17**, **117**) de renfort sont reliées deux à deux par des éléments (**19**) de consolidation en cisaillement.

6. Véhicule (**1**, **100**) selon l'une quelconque des revendications précédentes, dans lequel les poteaux (**12**, **112**) sont au nombre de trois et sont répartis aux sommets d'un triangle équilatéral.

7. Véhicule (**1**, **100**) selon l'une quelconque des revendications 1 à 5, dans lequel les poteaux (**12**, **112**) sont au nombre de quatre et sont répartis aux sommets d'un parallélogramme.

8. Véhicule (**1**, **100**) selon l'une quelconque des revendications précédentes dans lequel chaque dispositif (**15**, **115**) de verrouillage libérable comprend un élément magnétique.

9. Véhicule (**1**, **100**) selon l'une quelconque des revendications précédentes dans lequel chaque dispositif (**15**, **115**) de verrouillage libérable comprend un élément pyrotechnique.

10. Véhicule (**1**, **100**) selon l'une quelconque des revendications précédentes, dans lequel chaque poteau (**12**, **112**) est muni de deux dispositifs (**15**, **115**) de verrouillage libérables.

11. Véhicule (**1**, **100**) selon l'une quelconque des revendications précédentes, dans lequel chaque poteau s'étend longitudinalement entre deux extrémités (**13**, **14**), chaque extrémité (**13**, **14**) étant munie d'un dispositif (**15, 115**) de verrouillage.

12. Procédé d'assemblage d'au moins deux véhicules (**1**, **100**) selon l'une des revendications 1 à 11, comprenant les étapes suivantes :
- mise en position des au moins deux véhicules (**1**, **100**) de sorte que les poteaux (**12**, **112**) d'un premier véhicule (**1**, **100**) s'étendent au moins partiellement dans une même direction longitudinale que les poteaux (**12**, **112**) du deuxième véhicule (**1, 100**) ;
- mise en coopération de chaque dispositif (**15**, **115**) de verrouillage du premier véhicule (**1**, **100**) avec un dispositif (**15**, **115**) de verrouillage du deuxième véhicule (**1**, **100**) ;
- passage à l'état verrouillé des dispositifs (**15**, **115**) de verrouillage du premier véhicule (**1**, **100**) sur les dispositifs (**15**, **115**) de verrouillage du deuxième véhicule (**1**, **100**).

13. Empilement de véhicules (**1**, **100**) selon l'une quelconque des revendications 1 à 11, comprenant au moins deux véhicules (**1**, **100**) solidaires l'un de l'autre, le au moins un dispositif (**15**, **115**) de verrouillage libérable de chaque poteau (**12**, **112**) d'un premier véhicule (**1**, **100**) étant dans l'état verrouillé avec un dispositif (**15**, **115**) de verrouillage sur un poteau (**12**, **112**) du deuxième véhicule (**1**, **100**), les poteaux (**12**, **112**) de chaque véhicule s'étendant dans une même direction (**A**) longitudinale, l'empilement comprenant en outre un dispositif de commande de l'état des dispositifs (**15**, **115**) de verrouillage.

14. Empilement de véhicules (**1**, **100**) selon la revendication 13, dans lequel les véhicules (**1**, **100**) sont des satellites comprenant une face (**7**, **104**) Terre et une face (**8**, **103**) anti-Terre, les faces Terre et anti-Terre étant orientées selon la direction (**A**) longitudinale des poteaux (**12**, **112**).

15. Empilement de véhicules selon la revendication 13, dans lequel les véhicules (**1**, **100**) sont des satellites comprenant une face (**7**, **104**) Terre et une face (**8**, **103**) anti-Terre, les faces (**7**, **104**) Terre et (**8**, **103**) anti-Terre étant orientées selon une direction transversale aux poteaux (**12**, **112**).

16. Lanceur (**20**, **120**, **220**) de véhicules (**1**, **100**) spatiaux, le lanceur comprenant une structure (**21**, **121**, **221**) d'interface véhicule et au moins un premier empilement de véhicules (**1**, **100**) selon l'une quelconque des revendications 13 à 15, dans lequel au moins le premier véhicule (**1**, **100**) de l'empilement est un véhicule (**1**, **100**) selon la revendication 10 ou la revendication 11, un premier dispositif (**15**, **115**) de verrouillage de chaque poteau (**12**, **112**) du premier véhicule (**1**, **100**) étant dans l'état verrouillé sur un dispositif (**15**, **115**) de verrouillage du deuxième véhicule (**1**, **100**), le deuxième dispositif (**15**, **115**) de verrouillage de chaque poteau (**12**, **112**) du premier véhicule (**1**, **100**) étant dans l'état verrouillé sur la structure (**21**, **121**, **221**) d'interface véhicule.

17. Procédé de largage de véhicules (**1**, **100**) au moyen d'un lanceur (**21**, **121**, **221**) selon la revendication 16, comprenant une étape de séparation entre un véhicule ou groupe de véhicules (**1**, **100**) à larguer et un véhicule (**1**, **100**) destiné à rester dans le lanceur par mise dans l'état déverrouillé des dispositifs (**15**, **115**) de verrouillage entre les deux véhicules ou un véhicule (**1**, **100**) du groupe à larguer et le véhicule (**1**, **100**) destiné à rester dans le lanceur (**20**, **120**, **220**) de manière à larguer un unique véhicule ou le groupe de véhicules (**1**, **100**).

## Patentansprüche

1. Weltraumfahrzeug **(1, 100),** wie etwa ein Satellit, das dazu bestimmt ist, in eine Umlaufbahn um einen Planeten gebracht zu werden, wobei das Fahrzeug **(1, 100)** Folgendes umfasst:
- zumindest ein Ausrüstungsträgermodul **(2, 102)**, das dazu bestimmt ist, Ausrüstungen des Fahrzeugs **(1, 100)** zu tragen;
- zumindest drei Pfosten **(12, 112)**, die sich zumindest teilweise in eine selbe Längsrichtung **(A)** und an der Peripherie des Ausrüstungsträgermoduls **(2, 102**) erstrecken;
- eine Verstärkungsstruktur **(16, 116)**, die jeden Pfosten **(12, 112)** mit zumindest zwei anderen Pfosten **(12, 112)** starr transversal verbindet,
**dadurch gekennzeichnet, dass** jeder Pfosten **(12, 112)** mit zumindest einer lösbaren Verriegelungsvorrichtung **(15, 115)** ausgestattet ist, die dazu bestimmt ist, zwei Zustände einzunehmen:
∘ einen verriegelten Zustand, in dem die Verriegelungsvorrichtung **(15, 115)** an einer zusätzlichen Verriegelungsvorrichtung **(15, 115)** befestigt ist,
∘ einen entriegelten Zustand, in dem die Verriegelungsvorrichtung **(15, 115)** von jeder anderen Verriegelungsvorrichtung **(15, 115)** gelöst ist.

2. Weltraumfahrzeug **(1, 100)** nach Anspruch 1, wobei die Verstärkungsstruktur **(16, 116)** zweigförmige Verstärkungselemente **(17, 117)** umfasst, deren Anzahl zumindest der Anzahl an Pfosten **(12, 112)** entspricht, wobei jeder Zweig **(17, 117)** zwischen zwei Pfosten **(12, 112)** befestigt ist.

3. Weltraumfahrzeug **(1, 100)** nach Anspruch 2, wobei die Zweige **(17, 117)** mit Wänden des Ausrüstungsträgermoduls **(2, 102)** zusammenfallen, wobei die Wände Träger für Ausrüstungen des Fahrzeugs **(1, 100)** ausbilden.

4. Weltraumfahrzeug **(1, 100)** nach Anspruch 1, wobei die Verstärkungsstruktur **(16, 116)** zweigförmige Verstärkungselemente **(17, 117)** umfasst, deren Anzahl zumindest der Anzahl an Pfosten **(12, 112)** entspricht, wobei jeder Zweig **(17, 117)** einerseits an einem Pfosten **(12, 112)** und andererseits an einem selben Befestigungszentrum **(C)** befestigt ist.

5. Fahrzeug **(1, 100)** nach einem der Ansprüche 2 bis 4, wobei die Verstärkungszweige **(17, 117)** paarweise durch Konsolidierungselemente **(19)** in Scherung verbunden sind.

6. Fahrzeug **(1, 100)** nach einem der vorangehenden Ansprüche, wobei die Anzahl der Pfosten **(12, 112)** drei beträgt und sie auf die Spitzen eines gleichseitigen Dreiecks aufgeteilt sind.

7. Fahrzeug **(1, 100)** nach einem der Ansprüche 1 bis 5, wobei die Anzahl der Pfosten **(12, 112)** vier beträgt und sie auf die Spitzen eines Parallelogramms aufgeteilt sind.

8. Fahrzeug **(1, 100)** nach einem der vorangehenden Ansprüche, wobei jede lösbare Verriegelungsvorrichtung **(15, 115)** ein magnetisches Element umfasst.

9. Fahrzeug **(1, 100)** nach einem der vorangehenden Ansprüche, wobei jede lösbare Verriegelungsvorrichtung **(15, 115)** ein pyrotechnisches Element umfasst.

10. Fahrzeug **(1, 100)** nach einem der vorangehenden Ansprüche, wobei jeder Pfosten **(12, 112)** mit zwei lösbaren Verriegelungsvorrichtungen **(15, 115)** ausgestattet ist.

11. Fahrzeug **(1, 100)** nach einem der vorangehenden Ansprüche, wobei sich jeder Pfosten längs zwischen zwei Enden **(13, 14)** erstreckt, wobei jedes Ende **(13, 14)** mit einer Verriegelungsvorrichtung **(15, 115)** ausgestattet ist.

12. Verfahren zur Montage von zumindest zwei Fahrzeugen **(1, 100)** nach einem der Ansprüche 1 bis 11, umfassend die folgenden Schritte:
- Positionieren der zumindest zwei Fahrzeuge **(1, 100)**, sodass sich die Pfosten **(12, 112)** eines ersten Fahrzeugs **(1, 100)** zumindest teilweise in eine selbe Längsrichtung wie die Pfosten **(12, 112)** des zweiten Fahrzeugs **(1, 100)** erstrecken;
- In-Zusammenwirkung-Bringen jeder Verriegelungsvorrichtung **(15, 115)** des ersten Fahrzeugs **(1, 100)** mit einer Verriegelungsvorrichtung **(15, 115)** des zweiten Fahrzeugs **(1, 100)**;
- Versetzen der Verriegelungsvorrichtungen **(15, 115)** des ersten Fahrzeugs **(1, 100)** in den verriegelten Zustand an den Verriegelungsvorrichtungen **(15, 115)** des zweiten Fahrzeugs **(1, 100)**.

13. Stapel von Fahrzeugen **(1, 100)** nach einem der Ansprüche 1 bis 11, umfassend zumindest zwei miteinander verbundene Fahrzeuge **(1, 100)**, wobei sich die zumindest eine lösbare Verriegelungsvorrichtung **(15, 115)** jedes Pfostens **(12, 112)** eines ersten Fahrzeugs **(1, 100)** im verriegelten Zustand mit einer Verriegelungsvorrichtung **(15, 115)** an einem Pfosten **(12, 112)** des zweiten Fahrzeugs **(1, 100)** befindet, wobei sich die Pfosten **(12, 112)** jedes Fahrzeugs in eine selbe Längsrichtung **(A)** erstrecken, wobei der Stapel ferner eine Vorrichtung zum Steuern des Zustands der Verriegelungsvorrichtungen **(15, 115)** umfasst.

14. Stapel von Fahrzeugen **(1, 100)** nach Anspruch 13, wobei die Fahrzeuge **(1, 100)** Satelliten sind, die eine Erdseite **(7, 104)** und eine Erdgegenseite **(8, 103)** umfassen, wobei die Erdseite und die Erdgegenseite in der Längsrichtung **(A)** der Pfosten **(12, 112)** ausgerichtet sind.

15. Stapel von Fahrzeugen nach Anspruch 13, wobei die Fahrzeuge **(1, 100)** Satelliten sind, die eine Erdseite **(7, 104)** und eine Erdgegenseite **(8, 103)** aufweisen, wobei die Erdseite **(7, 104)** und die Erdgegenseite **(8, 103)** in einer Querrichtung zu den Pfosten **(12, 112)** ausgerichtet sind.

16. Trägerrakete (20, 120, 220) von Weltraumfahrzeugen **(1, 100)**, wobei die Trägerrakete eine Fahrzeugschnittstellenstruktur **(21, 121, 221)** und zumindest einen ersten Stapel von Fahrzeugen **(1, 100)** nach einem der Ansprüche 13 bis 15 umfasst, wobei zumindest das erste Fahrzeug **(1, 100)** des Stapels ein Fahrzeug **(1, 100)** nach Anspruch 10 oder Anspruch 11 ist, wobei sich eine erste Verriegelungsvorrichtung **(15, 115)** jedes Pfostens **(12, 112)** des ersten Fahrzeugs **(1, 100)** im verriegelten Zustand an einer Verriegelungsvorrichtung **(15, 115)** des zweiten Fahrzeugs **(1, 100)** befindet, wobei sich die zweite Verriegelungsvorrichtung **(15, 115)** jedes Pfostens **(12, 112)** des ersten Fahrzeugs **(1, 100)** in einem verriegelten Zustand an der Fahrzeugschnittstellenstruktur **(21, 121, 221)** befindet.

17. Verfahren zur Freigabe von Fahrzeugen **(1, 100)** mittels einer Trägerrakete **(21, 121, 221)** nach Anspruch 16, umfassend einen Schritt der Trennung zwischen einem Fahrzeug oder einer Gruppe von Fahrzeugen **(1, 100)**, die freizugeben sind, und einem Fahrzeug **(1, 100)**, das dazu bestimmt ist, in der Trägerrakete zu bleiben, durch Versetzen der Verriegelungsvorrichtungen **(15, 115)** zwischen den beiden Fahrzeugen bzw. einem Fahrzeug **(1, 100)** der Gruppe, die freizugeben sind, und dem Fahrzeug **(1, 100)**, das dazu bestimmt ist, in der Trägerrakete **(20, 120, 220)** zu bleiben, in den entriegelten Zustand, um ein einziges Fahrzeug bzw. die Gruppe von Fahrzeugen **(1, 100)** freizugeben.

## Claims

1. A spacecraft (**1**, **100**) such as a satellite, intended to be put into orbit around a planet, the spacecraft (**1**, **100**) comprising:
- at least one equipment carrying module (**2**, **102**), intended to support the spacecraft (**1**, **100**) equipments;
- at least three posts (**12**, **112**) extending at least partially in a same longitudinal direction (**A**) and at the periphery of the equipment carrying module (**2**, **102**),
- a reinforcing structure (**16**, **116**) which rigidly connects each post (**12**, **112**) transversely to at least two other posts (**12**, **112**),
**characterized in that** each post (**12**, **112**) being provided with at least one releasable locking device (**15**, **115**) which may have two states:
∘ a locked state, wherein the locking device (**15**, **115**) is attached to an additional locking device (**15**, **115**),
∘ an unlocked state, wherein the locking device (**15**, **115**) is released from any other locking device (**15**, **115**).

2. The spacecraft (**1**, **100**) according to claim 1, wherein the reinforcing structure (**16**, **116**) comprises reinforcing members in the form of legs (**17**, **117**), the number of which corresponds to at least the number of posts (**12**, **112**), each leg (**17**, **117**) being attached between two posts (**12**, **112**).

3. The spacecraft (**1**, **100**) according to claim 2, wherein the legs (**17**, **117**) are combined with the equipment carrying module (**2**, **102**) walls, the walls forming a support for the spacecraft (**1**, **100**) equipment.

4. The spacecraft (**1**, **100**) according to claim 1, wherein the reinforcing structure (**16**, **116**) comprises reinforcing members in the form of legs (**17**, **117**), the number of which corresponds to at least the number of posts (**12**, **112**), each leg (**17**, **117**) being attached on the one hand to a post (**12**, **112**) and on the other hand to a single attachment center (**C**).

5. The spacecraft (**1**, **100**) according to any of claims 2 to 4, wherein the reinforcing legs (**17**, **117**) are connected in pairs by shear consolidating members (**19**).

6. The spacecraft (**1**, **100**) according to any of the previous claims, wherein there are three posts (**12**, **112**) and they are distributed on the vertices of an equilateral triangle.

7. The spacecraft (**1**, **100**) according to any of the claims 1 to 5, wherein there are four posts (**12**, **112**) and they are distributed on the vertices of a parallelogram.

8. The spacecraft (**1**, **100**) according to any of the previous claims, wherein each releasable locking device (**15**, **115**) comprises a magnetic member.

9. The spacecraft (**1**, **100**) according to any of the previous claims, wherein each releasable locking device (**15**, **115**) comprises a pyrotechnic member.

10. The spacecraft (**1**, **100**) according to any of the previous claims, wherein each post (**12**, **112**) is provided with two releasable locking devices (**15**, **115**).

11. The spacecraft (**1**, **100**) according to any of the previous claims, wherein each post extends longitudinally between two ends (**13**, **14**), each end (**13**, **14**) being provided with a locking device (**15**, **115**).

12. Method of assembling at least two spacecrafts (**1**, **100**) according to any of claims 1 to 11, comprising the steps of:
- positioning the at least two spacecrafts (**1**, **100**) such that the posts (**12**, **112**) of a first spacecraft (**1**, **100**) extend at least partially in a same longitudinal direction as the posts (**12**, **112**) of the second spacecraft (**1**, **100**);
- cooperating each locking device (**15**, **115**) of the first spacecraft (**1**, **100**) with a locking device (**15**, **115**) of the second spacecraft (**1**, **100**);
- switching to the locked state of the locking devices (**15**, **115**) of the first spacecraft (**1**, **100**) on the locking devices (**15**, **115**) of the second spacecraft (**1**, **100**).

13. Stack of spacecraft (**1**, **100**) according to any of claims 1 to 11, comprising at least two spacecrafts (**1**, **100**) secured together, the at least one releasable locking device (**15**, **115**) of each post (**12**, **112**) of a first spacecraft (**1**, **100**) being in locked position with a locking device (**15, 115**) on a post (**12**, **112**) of the second spacecraft (**1**, **100**), the posts (**12**, **112**) for each spacecraft extending in a same longitudinal direction (**A**), the stack further comprising a device for controlling the state of the locking devices (**15**, **115**).

14. Stack of spacecrafts (**1**, **100**) according to claim 13, wherein the spacecrafts (**1**, **100**) are satellites comprising an Earth face (**7**, **104**) and an anti-Earth face (**8**, **103**), the Earth and anti-Earth faces being oriented in the longitudinal direction (**A**) of the posts (**12**, **112**).

15. Stack of spacecrafts (**1**, **100**) according to claim 13, wherein the spacecrafts (**1**, **100**) are satellites comprising an Earth face (**7**, **104**) and an anti-Earth face (**8**, **103**), the Earth (**7**, **104**) and anti-Earth (**8**, **103**) **faces** being oriented in a direction transverse to the posts (**12**, **112**).

16. Spacecraft (**1**, **100**) launcher (**20**, **120**, **220**), the launcher comprising a spacecraft interface structure (**21**, **121**, **221**) and at least one first stack of spacecrafts (**1**, **100**) according to any of claims 13 to 15, wherein at least the first spacecraft (**1**, **100**) of the stack is a spacecraft (**1**, **100**) according to claim 10 or claim 11, a first locking device (**15**, **115**) for each post (**12**, **112**) of the first spacecraft (**1**, **100**) being in the locked state on a locking device (**15**, **115**) of the second spacecraft (**1**, **100**), the second locking device (**15**, **115**) of each post (**12**, **112**) of the first spacecraft (**1**, **100**) being in the locked state on the spacecraft interface structure (**21**, **121**, **221**).

17. Method for dropping spacecrafts (**1**, **100**) by means of a launcher (**21**, **121**, **221**) according to claim 16, comprising a step of separation between a group of spacecrafts (**1**, **100**) to be dropped and one spacecraft (**1**, **100**) intended to remain in the launcher by putting into the unlocked state the locking devices (**15**, **115**) between a spacecraft (**1**, **100**) from the group to be dropped and the spacecraft (**1**, **100**) intended to remain in the launcher (**20**, **120**, **220**), in order to drop the group of spacecrafts (**1**, **100**).
